# EUROPÄISCHE PATENTSCHRIFT

(11) **EP 1 972 781 B1**
(45) Veröffentlichungstag und Bekanntmachung des Hinweises auf die Patenterteilung: **02.10.2013**
(21) Anmeldenummer: 07021775.7
(22) Anmeldetag: 09.11.2007
(51) Int. Cl.: F03D 7/00, F03D 7/02, F03D 11/04

(54) **Schwingungsdämpfung einer Windenergieanlage**
Vibration damping for a wind turbine plant
Amortissement d'oscillations d'une éolienne

(30) Priorität: 17.11.2006 DE 102006054666
(43) Veröffentlichungstag der Anmeldung: 24.09.2008
(73) Patentinhaber: REpower Systems SE, 22297 Hamburg (DE)
(72) Erfinder: Seidel, Marc, 49090 Osnabrück (DE); von Mutius, Martin, 24358 Ascheffel (DE); Steudel, Dirk, 24116 Kiel (DE)
(74) Vertreter: Seemann, Ralph

(56) Entgegenhaltungen:
- DE-A1- 10 141 098
- DE-A1-102004 024 564
- DE-C1- 19 860 215
- US-B1- 6 525 518

## Beschreibung

Die Erfindung betrifft ein Verfahren zum Betrieb einer Windenergieanlage, insbesondere einer in Gewässergrund gegründeten Windenergieanlage, beispielsweise einer Offshore-Windenergieanlage, wobei die Windenergieanlage eine Tragstruktur und einen Rotor, der an der Tragstruktur angeordnet ist, umfasst und wobei der Rotor ein Rotorblatt aufweist. Die Erfindung betrifft ferner eine Windenergieanlage, insbesondere eine in einem Gewässergrund gegründete Windenergieanlage, beispielsweise eine Offshore-Windenergieanlage, mit einer Tragstruktur und einem Rotor, der ein Rotorblatt umfasst.

Aus DE 10 2004 024 564 B4 ist ein Verfahren zur Steuerung und Regelung einer Windenergieanlage sowie eine entsprechende Windenergieanlage bekannt, wobei ein um einen Azimut-Winkel verstellbares Maschinenhaus sowie mindestens ein um seine Längsachse verstellbares Rotorblatt und eine Stromversorgung vorgesehen sind, wobei die Windenergieanlage in einem Trudelbetrieb betrieben wird, wobei in Abhängigkeit einer Windgeschwindigkeit und der Windrichtung eine Azimut-Winkelposition für das Maschinenhaus und ein oder mehrere Verstellwinkel für das mindestens eine Rotorblatt, wenn eine gemessene Windgeschwindigkeit einen vorbestimmten Geschwindigkeitswert überschreitet, eingestellt wird und ein Azimut-Antrieb zur Einstellung der Azimut-Winkelposition des Maschinenhauses angetrieben wird und entsprechend mindestens ein von der Stromversorgung gespeister Pitch-Antrieb (Rotorblattwinkel-Antrieb) das mindestens eine Rotorblatt in den von der Steuereinheit bestimmten Verstellwinkel einstellt, wobei das mindestens eine Rotorblatt in der eingestellten Position sich mit einer Drehzahl aus einem vorbestimmten Drehzahlbereich dreht.

DE 198 60 215 C1 offenbart ein Verfahren zum Betreiben einer Offshore-Windenergieanlage, die mit einer Einrichtung zum Eingriff in die einwirkenden Windlasten auf den Rotor versehen ist, mit den Schritten Erfassen der Stärke des auf die Rotorblätter einwirkenden Windes, Erfassen der Höhe von sich auf die Windenergieanlage zu bewegenden Wellen, Berechnen der sich aus der Windlast und der Wellenlast ergebenden von der Gründung aufzunehmenden Gesamtlast und Bewirken eines lastvermindernden Eingriffs auf den Rotor, dann, wenn die bei Auftreffen der Welle auf den Turm zu erwartende Gesamtlast eine Grenzlast überschreitet.

DE 101 41 098 A1 offenbart eine Windkraftanlage mit einem um eine Rotorachse drehbaren und mindestens einen sich quer zur Rotorachse erstreckenden Rotorblatt aufweisenden Rotor, einer Verstelleinrichtung zum Verstellen des mindestens einen Rotorblattes, wobei durch das Verstellen das bei Windlast bezüglich der Rotorachse erzeugte Drehmoment veränderbar ist und einer Stabilisierungsanordnung, mit der der Rotor in mindestens einer vorgegebenen Drehstellung stabilisierbar ist, wobei die Stabilisierungsanordnung eine an die Verstelleinrichtung koppelbare Kopplungseinrichtung aufweist, mit der bei einer Abweichung von der vorgegebenen Drehstellung eine Verstellung des mindestens einen Rotorblattes zur Erzeugung eines dieser Abweichung entgegenwirkenden Drehmoments veranlasst werden kann.

Insbesondere bei Offshore-Windenergieanlagen ist von der Anmelderin festgestellt worden, dass bei Stillstand der Windenergieanlage die Gefahr besteht, dass die auf die Gründung einwirkenden Wellen der Windenergieanlage diese in der ersten oder zweiten Biegeeigenfrequenz das Gesamtsystem anregen können, so dass es zu unerwünschten Schwingungen kommen kann, die zu Beschädigungen oder vorzeitiger Alterung der Windenergieanlage führen kann.

Es ist Aufgabe der vorliegenden Erfindung, unerwünschte Schwingungen der Tragstruktur einer Windenergieanlage zu verringern bzw. zu vermeiden.

Gelöst wird diese Aufgabe durch ein Verfahren zum Betrieb einer in Gewässergrund gegründeten Windenergieanlage, wobei die Windenergieanlage eine Tragstruktur und einen Rotor, der an der Tragstruktur, insbesondere einem Turm angeordnet ist, umfasst, wobei der Rotor ein Rotorblatt aufweist, wobei zur Verringerung der durch mechanische Einwirkungen auf die Tragstruktur erzeugten Schwingungen der Tragstruktur die Windenergieanlage im Trudelbetrieb geführt wird, wobei die mechanischen Einwirkungen auf die Tragstruktur durch Wasserwellen induziert sind.

Erfindungsgemäß ist erkannt worden, dass durch Führen der Windenergieanlage im Trudelbetrieb der Effekt einer aerodynamischen Dämpfung ausgenutzt werden kann, um Schwingungen der Tragstruktur zu verringern. Hierzu ist das Führen der Windenergieanlage im Trudelbetrieb vorzugsweise so auszugestalten, dass die Trudeldrehzahl des Rotors, vorzugsweise im Leerlauf, so eingestellt wird, dass ausreichend aerodynamische Dämpfung entsteht. Die Dämpfung der Schwingungen beruht auf der durch die Schwingung der Tragstruktur hervorgerufenen Bewegung des Rotors in der dem Trägheitseffekt unterliegenden Luftmasse der Strömungsröhre, die durch den Trudelbetrieb erzeugt wird. Das Führen der Windenergieanlage im Trudelbetrieb beinhaltet insbesondere einen Betrieb mit konstantem Blattwinkel, der bei der vorherrschenden Windgeschwindigkeit zu einer Rotation des Rotors führt, wobei eine aktive Überwachung von Betriebsparametern auch bei konstantem Blattwinkel insbesondere der Drehzahl und/oder der Windgeschwindigkeit, umfasst ist.

Der Begriff Tragstruktur umfasst im Sinne der Erfindung insbesondere die tragende Struktur der Windenergieanlage, also insbesondere den Turm und die Gründung, die den Rotor über dem Meeresgrund oder bei schwimmenden Gründungen über dem Meeresspiegel trägt. Insbesondere ist auch die Bettung zur Tragstruktur vorzugsweise zu zählen. Bei der Gründung handelt es sich insbesondere um den Teil der Tragstruktur, der vom Meeresgrund bzw. Seegrund zur Wasseroberfläche bzw. bis zum Turmfuß reicht. Die Bettung ist insbesondere - beispielsweise bei einem Monopile - der Teil der Windenergieanlage, der im Grund verankert bzw. versenkt ist. Bei einem Flachfundament bzw. Gravitationsfundament ist die Bettung die Auflagefläche auf dem Seeboden mit dessen Nachgiebigkeit.

Das Betriebsverfahren der Windenergieanlage ist insbesondere bei Offshore-Wind-energieanlagen bevorzugt zu verwenden. Vorzugsweise gibt die Windenergieanlage bei der Durchführung des Verfahrens keine Energie an ein Netz ab bzw. wird im Leerlauf betrieben. Vorzugsweise wird das Betriebsverfahren bei Windgeschwindigkeiten unter der Nennwindgeschwindigkeit der Windenergieanlage und insbesondere vorzugsweise unter der Einschaltwindgeschwindigkeit der Windenergieanlage betrieben. Vorzugsweise bedeutet der Trudelbetrieb einer Windenergieanlage, dass sich der Rotor im Leerlauf dreht, wobei der Generator bevorzugt keine Energie in das Netz einspeist. Das erzeugte Drehmoment des Rotors ist dann sehr gering und dient im Wesentlichen zur Überwindung der Reibungswiderstände des Triebstrangs. Mit Trudelbetrieb ist auch ein motorischer Betrieb des Generators bei Windstille eingeschlossen, d.h. die Energie zur Überwindung des Luftwiderstand des Rotors wird in diesem Fall dem Netz entnommen.

Vorzugsweise weist die Windenergieanlage eine Blattwinkelverstellvorrichtung auf, wobei in Abhängigkeit wenigstens eines Parameters, insbesondere Umgebungsparameters ein, insbesondere vorgebbarer, Blattwinkel eingestellt wird. Unter Parameter ist im Rahmen der Erfindung insbesondere eine physikalische Größe wie Windgeschwindigkeit, mittlere Windgeschwindigkeit, Wellengröße, -länge und/oder -geschwindigkeit, Schwingungsamplitude des Turmkopfes, Schwingungsfrequenz des Turmkopfes usw. zu verstehen. Die Blattwinkelverstellvorrichtung ist vorzugsweise an der Blattwurzel des Rotorblatts angeordnet und verstellt das Rotorblatt um die Längsachse des Rotorblattes zur einem vorgebbaren Blattwinkel. Wenn der Blattwinkel (Pitchwinkel) in Abhängigkeit von der Trudeldrehzahl und/oder der Windgeschwindigkeit und/oder einer gemessenen Schwingungsamplitude der Tragstruktur eingestellt wird, ist eine besonders sichere Verfahrensführung möglich. Vorzugsweise wird eine vorgebbare Trudeldrehzahl eingestellt. Ferner vorzugsweise wird die Trudeldrehzahl in Abhängigkeit der Windgeschwindigkeit und/oder dem mittieren Blattwinkel eingestellt. Ein mittlerer Blattwinkel ist im Rahmen der Erfindung insbesondere ein zeitlicher Mittelwert eines Blattwinkels, bei Einzelblattverstellung ist aber auch der Mittelwert der Blattwinkel mindestens zweier Rotorblätter umfasst.

Besonders bevorzugt ist die Ausgestaltung des Verfahrens, wenn die Trudeldrehzahl, insbesondere bei Windgeschwindigkeiten oberhalb 3m/s, zwischen 10 % und 80 %, insbesondere zwischen 15 % und 60 % der Nenndrehzahl der Windenergieanlage liegt. Hierdurch ist eine besonders effiziente Verringerung der durch mechanische Einwirkungen auf die Tragstruktur erzeugten Schwingungen der Tragstruktur der Windenergieanlage möglich, ohne bei plötzlichen Windböen zusätzlich hohe Belastungen aus der Rotoraerodynamik in das System einzuprägen.

Es ist außerdem besonders bevorzugt, wenn wenigstens ein Parameter (Messwert) der Wellenhöhe, des Wellenabstands, der Wellengeschwindigkeit, der Turmkopfbeschleunigung, der Schwingungsamplitude der Tragstruktur, der mittleren Windgeschwindigkeit oder der mittleren Trudeldrehzahl gemessen wird und mit einem dazu vorgebbaren Parameter (Vorgabewert) verglichen wird und in Abhängigkeit des Ergebnisses des Vergleichs die Trudeldrehzahl oder der Blattwinkel oder der Nachführwinkel des Rotors (Azimutwinkel) gesteuert oder geregelt wird. So ist eine sehr genaue Verfahrensführung möglich. Beispielsweise kann bei Überschreiten eines vorgegebenen Turmkopfbeschleunigungswertes die Trudeldrehzahl erhöht werden und/oder bei Erreichen einer mittleren Windgeschwindigkeit der Blattwinkel angepasst werden. Es kann beispielsweise auch bei Vorsehen des Messens bzw. Auswertens des Wellenabstands und/oder der Wellengeschwindigkeit und/oder der Wellenhöhe im Voraus evaluiert werden, ob eine ungewünschte Schwingung der Tragstruktur der Windenergieanlage erzeugt werden kann und dann entsprechend eine Trudeldrehzahl vor Auftreten von unerwünscht starken Schwingungen der Tragstruktur eingestellt werden, so dass eine Stabilisierung der Tragstruktur schon vor Auftreten entsprechender mechanischer Einwirkungen auf die Tragstruktur stattfindet.

Vorzugsweise wird der Rotor einer Windrichtung nachgeführt, wobei die Windnachführung abhängig von der Windrichtung und/oder dem Verhältnis der Amplituden von Turmkopflängs- zu Turmkopfquerschwingung ist. Unter Nachführung des Rotors relativ zu einer Windrichtung wird insbesondere eine Azimut-Winkelverstellung des Rotors bzw. des Turmkopfes bzw. des Maschinenhauses verstanden. Im Rahmen der Erfindung beinhaltet der Begriff Turmkopf auch den Begriff Maschinenhaus.

Ein sehr sicheres Verfahren ist möglich, wenn ein unterer und/oder ein oberer Drehzahlgrenzwert des Rotors vorgebbar ist, wobei bei Unterschreiten des unteren Drehzahlgrenzwerts oder Überschreiten des oberen Drehzahlgrenzwerts eine Veränderung des Blattwinkels des Rotorblatts vorgenommen wird.

Vorzugsweise wird bei fehlender Energieversorgung das Rotorblatt in eine Fahnenstellung verbracht. Mit Energieversorgung ist hier die Versorgung durch das elektrische Netz oder durch Hilfsenergiesysteme bezeichnet. Letzteres kann in Form von Notstromaggregaten oder Akkumulatoren ausgeführt sein, die bei Netzausfall die Fortführung des geführten Trudelbetriebs ermöglichen. Bricht auch eine derartige Hilfsenergieversorgung zusammen, werden die Rotorblätter über die Notversorgung der Blattverstellung (Pitchbatterien) in die sichere Fahnenstellung verfahren.

Die Aufgabe wird ferner gelöst durch eine Windenergieanlage, die in einem Gewässergrund gegründet ist, beispielsweise eine Offshore-Windenergieanlage, mit einer Tragstruktur und einem Rotor, der ein Rotorblatt umfasst, wobei wenigstens ein Sensor vorgesehen ist, der die Amplitude, die Beschleunigung und/oder die Richtung einer Schwingung der Tragstruktur und/oder eine Beschleunigung der Tragstruktur und wenigstens eine physikalische Größe, nämlich den Wellenabstand und/oder die Wellengeschwindigkeit von Wasserwellen, die auf die Windenergieanlage mechanisch einwirken und eine Schwingung oder Schwingungen der Tragstruktur hervorruft oder hervorrufen, misst, wobei eine Steuer- oder Regelvorrichtung vorgesehen ist, die in Abhängigkeit wenigstens eines solchen Messwertes einen Blattwinkel des Rotorblatts oder eine Trudeldrehzahl zur Verringerung der durch mechanische Einwirkungen auf die Tragstruktur erzeugten Schwingungen der Tragstruktur vorgibt. Vorzugsweise ist zudem eine Blattwinkelverstellvorrichtung vorgesehen, die den von der Steuer- oder Regelvorrichtung vorgegebenen Blattwinkel einstellt.

Unter einer physikalischen Größe ist insbesondere im Fall einer in einem Gewässergrund gegründeten Windenergieanlage der Wellenabstand und/oder die Wellengeschwindigkeit gemeint.

Vorzugsweise ist ein Sensor vorgesehen, der eine mittlere Trudeldrehzahl des Rotors misst oder es ist eine Rechenvorrichtung wie beispielsweise ein Computer, der getrennt von der Steuer- oder Regelvorrichtung allerdings auch in dieser integriert sein kann oder diese selbst sein kann, vorgesehen, die die mittlere Trudeldrehzahl bestimmt, wobei die mittlere Trudeldrehzahl in der Steuer- oder Regelvorrichtung verarbeitet wird, um den Blattwinkel des Rotorblatts vorzugeben. Vorzugsweise ist ein Sensor vorgesehen, der eine Wellenhöhe, einen Wellenabstand, eine Wellengeschwindigkeit und/oder eine Wellenrichtung misst, wobei der Messwert oder die Messwerte in der Steuer- oder Regelvorrichtung verarbeitet wird oder werden, um den Blattwinkel des Rotorblatts und/oder den Nachführwinkel des Rotors vorzugeben.

Es ist ferner vorzugsweise ein Softwareprodukt mit Programm-Code-Mitteln vorgesehen, um alle Verfahrensschritte gemäß dem erfindungsgemäßen oder einem vorzugsweisen Verfahren auf einem Computer und/oder einer Steuer- oder Regelvorrichtung einer Windenergieanlage auszuführen. Hierbei handelt es sich um einen Computer bzw. eine Steuer- oder Regelvorrichtung einer Windenergieanlage. Vorzugsweise ist das Softwareprodukt auf wenigstens einem Datenträger oder Medium speicherbar.

Insbesondere vorzugsweise ist eine Steuer- oder Regelvorrichtung einer Windenergieanlage angegeben, die ausgelegt ist, um ein erfindungsgemäßes Softwareprodukt auszuführen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer erfindungsgemäßen Windenergieanlage,
- Fig. 2a: ein schematisches Diagramm eines longitudinalen Biegemoments einer Turmlängsschwingung einer Windenergieanlage bei Durchführung des erfindungsgemäßen Verfahrens bei einer Windgeschwindigkeit von 3 m/s,
- Fig. 2b: ein schematisches Diagramm eines longitudinalen Biegemoments einer Turmlängsschwingung einer Windenergieanlage ohne Durchführung des erfindungsgemäßen Verfahrens bei einer Windgeschwindigkeit von 3 m/s,
- Fig. 3a: ein schematisches Diagramm eines longitudinalen Biegemoments einer Turmlängsschwingung einer Windenergieanlage bei Durchführung des erfindungsgemäßen Verfahrens bei einer Windgeschwindigkeit von 6 m/s,
- Fig. 3b: ein schematisches Diagramm eines longitudinalen Biegemoments einer Turmlängsschwingung einer Windenergieanlage ohne Durchführung des erfindungsgemäßen Verfahrens bei einer Windgeschwindigkeit von 6 m/s, und
- Fig.4: ein schematisches Diagramm einer Kennlinie des Blattwinkels über der Windgeschwindigkeit.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

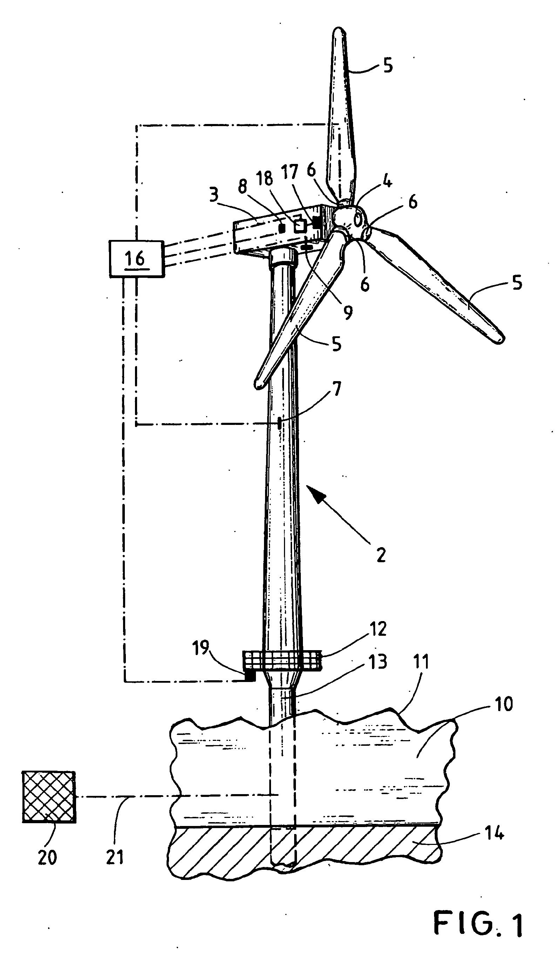

Fig. 1 zeigt eine schematische Darstellung einer erfindungsgemäßen Windenergieanlage mittels der das erfindungsgemäße Verfahren durchgeführt werden kann. Die Windenergieanlage ist mit dem Bezugszeichen 1 versehen. Es kann beispielsweise eine 5M der Anmelderin erfindungsgemäß betrieben werden. Diese hat eine Turmkopfhöhe von ca. 90 m und einen Rotordurchmesser von ca. 126 m. Es ist ein Turm 2 vorgesehen, der mittels eines Monopile 13 in einem Gewässergrund 14 gegründet ist. Die Tragstruktur ist somit insbesondere die Kombination aus dem Turm 2 und dem Monopile 13. Die Gründung ist hier nur angedeutet. Das Gewässer ist mit dem Bezugszeichen 10 gekennzeichnet. Bei Offshore-Windenergieanlagen werden beispielsweise Wassertiefen von 20 m bis 30 m vorherrschen. Anstelle einer Gründung mittels Monopilen kann auch ein Schwerkraftfundament oder ein Tripod bzw. eine Jackett-Gründung vorgesehen sein.

Um möglichst wenig mechanische Einwirkungen durch Wellen 11 auf die Windenergieanlage zu erzeugen, ist es sinnvoll, möglichst wenig Angriffsfläche zu bieten, weswegen an sich ein Schwerkraftfundament weniger geeignet ist bzw. bei einem Schwerkraftfundament größere Schwingungseffekte durch Einwirkung von mechanischer Energie auf den Turm 2 bzw. die Gründung des Turms 2 einwirken können.

Es ist außerdem noch eine Plattform 12 dargestellt, auf der sich beispielsweise Menschen aufhalten können. Die Höhe dieser Plattform 12 oberhalb von der Oberfläche des Gewässers 10 ist vorzugsweise so ausgestaltet, dass die Plattform 12 nicht durch sehr hohe Wellen beeinträchtigt wird.

Die Windenergieanlage 1 weist einen Turmkopf 3 bzw. eine Gondel 3 bzw. ein Maschinenhaus 3 auf, in dem/der beispielsweise ein Generator und eine Welle angeordnet sein können. Die Welle ist mit einer Nabe 4, an der drei Rotorblätter 5 angeordnet sind, deren Rotorblatt- bzw. Pitchwinkel über schematisch angedeutete Blattwinkelverstellungsvorrichtungen 6 wie üblich verstellt werden können.

Es besteht nun bei derartigen Windenergieanlagen wie in Fig. 1 dargestellt, insbesondere bei Offshore-Windenergieanlagen, die Gefahr, dass im Stillstand die auf die Gründung, in diesem Fall das Monopile 13, einwirkenden Wellen 11 die Windenergieanlage in der ersten und zweiten Biegeeigenfrequenz des Gesamtsystems anregen können. Die erste Biegeeigenfrequenz ist eine Schwingung über die volle Länge der Windenergieanlage mit einer großen Amplitude im Turmkopf und die zweite Biegeeigenfrequenz ist eine Schwingung mit einem Bauch in der Mitte der Windenergieanlage. Bei stehenden Anlagen liegt so gut wie keine aerodynamische Dämpfung vor. Erfindungsgemäß wird dafür gesorgt, dass bei der Gefahr von Biegeeigenfrequenzen der Windenergieanlage bzw. bei existierenden Schwingungen der Windenergieanlage die Windenergieanlage in einem Trudelbetrieb geführt wird, d.h. mit einer Rotation des Rotors, so dass eine aerodynamische Dämpfung aufgebaut bzw. erzeugt wird. Hierbei ist es insbesondere bevorzugt, wenn die Trudeldrehzahl des Rotors im Leerlauf so eingestellt wird, dass eine ausreichende aerodynamische Dämpfung entsteht. Hierbei wird die Drehzahl im Trudelbetrieb soweit erhöht, dass die Schwingung des Turms, die aufgetreten ist, bzw. die Schwingung, die aufgrund physikalischer Parameter auftreten kann, gedämpft wird. Die Dämpfung führt dazu, dass die Schwingungsamplitude eines Biegemoments des Turms wenigstens halbiert wird. Wenn beispielsweise bei einer normalen Trudeldrehzahl von 0 bis 2 Umdrehungen/min rotorseitig bei einer Nenndrehzahl von 12 Umdrehungen/min immer noch zu hohe Schwingungen auftreten, kann die Trudeldrehzahl beispielsweise auf 8 Umdrehungen/min erhöht werden, so dass eine aerodynamische Dämpfung erzeugt wird. Der Rotor der Windenergieanlage 1 dreht sich somit, ohne dass Strom bzw. Energie aus dem System entnommen wird, um in ein Netz gespeist zu werden bzw. einen Verbraucher anzutreiben.

In dem Ausführungsbeispiel gemäß Fig. 1 ist das Netz mit der Bezugsziffer 20 schematisch angedeutet. Das Verbrauchsnetz 20 ist mit einem Kabel 21 mit der Windenergieanlage verbunden.

Es sind im Ausführungsbeispiel gemäß Fig. 1 einige Sensoren 7 - 9, 17 und 19 vorgesehen, die wenigstens teilweise unterschiedliche Funktionen haben. Es ist nicht notwendig, sämtliche Sensoren vorzusehen. Der Sensor 7 ermittelt Schwingungen des Turms 2, die typischerweise bei der zweiten Biegeeigenfrequenz des Gesamtsystems auftreten können. Vorzugsweise ist der Sensor 7 in der Mitte des Gesamtsystems angeordnet, insbesondere vorzugsweise an einem Ort, der nicht notwendigerweise der geometrischen Mitte des Gesamtsystems entspricht, sondern dem Ort der Windenergieanlage, an der der Bauch der zweiten Biegeeigenfrequenz des Gesamtsystems der Windenergieanlage die größte Amplitude aufweist. Der Sensor 7 kann ein Dehnmessstreifen sein. Er kann allerdings auch ein Beschleunigungssensor sein.

Die Sensoren 8 und 9 können beispielsweise Beschleunigungssensoren sein, die eine Turmkopfschwingung in Turmkopflängsrichtung und -querrichtung misst. Der physikalische Parameter, der hier gemessen werden kann, ist beispielsweise die Schwingungsamplitude, die Schwingungsgeschwindigkeit und/oder die Beschleunigung. Hierzu können auch die an sich in einem Turmkopf schon im üblichen Betrieb befindlichen Sensoren verwendet werden, die beispielsweise ein Notaus-Signal erzeugen, wenn die Schwingungen zu stark werden, beispielsweise im Hinblick auf die Amplitude oder die Beschleunigung. Die dargestellten Sensoren in Fig. 1 sind nur sehr schematisch dargestellt. Der Sensor 17 kann beispielsweise dazu dienen, eine Drehzahl des Rotors zu messen. Die Rechenvorrichtung 18 kann vorgesehen sein, um die mittlere Trudeldrehzahl bzw. mittlere Drehzahl zu bestimmen. Außerdem ist ein Sensor 19 vorgesehen, der dazu dienen kann, die Wellenhöhe, einen Wellenabstand und/oder eine Wellengeschwindigkeit zu messen. Der Sensor 19 ist vorzugsweise ein auf elektromagnetischen Wellen basierender Sensor, beispielsweise ein Infrarotsensor oder ein optischer Sensor. Insbesondere kann der Sensor 19 als Abstandsmesssensor oder als Doppler-Sensor ausgebildet sein. Die Sensoren sind mit als strichpunktierte Linien dargestellten Leitungen mit einer schematisch dargestellten Steuer- oder Regelvorrichtung 16 verbunden, in der die für die Steuerung oder Regelung der Windenergieanlage wesentlichen Parameter wie beispielsweise ein Blattwinkelvorgabewert oder ein Trudeldrehzahlvorgabewert aus den Messergebnissen berechnet werden kann.

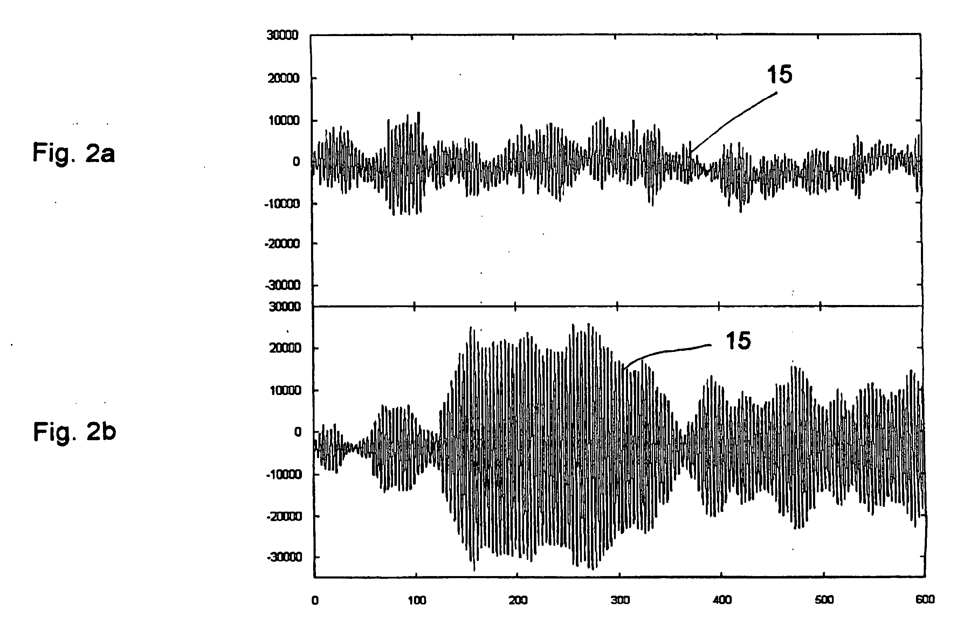

Fig. 2 zeigt schematische Diagramme eines Turmfußbiegemoments in kNm über der Zeit in Sekunden bei einer Windgeschwindigkeit von 3 m/s. In der Fig. 2a sind die Turmfußbiegemomente aufgetragen, die im Betrieb einer erfindungsgemäßen Windenergieanlage bzw. unter Verwendung eines erfindungsgemäßen Verfahrens auftreten. In diesem Fall ist der Pitchwinkel bei 10° eingestellt, wobei ein Pitchwinkel von 90° die Fahnenstellung bedeutet. In der Fig. 2b ist der Pitchwinkel bei 90° eingestellt. In Fig. 2b wird das erfindungsgemäße Verfahren nicht verwendet. Es ist deutlich zu erkennen, dass die Amplitude in der Kurve gemäß dem nicht erfindungsgemäßen Verfahren gemäß Fig. 2b deutlich größer sind, was zu einer deutlich höheren Belastung der Windenergieanlage führt und damit zu einem erhöhten Verschleiß bzw. der Notwendigkeit, eine stabilere Windenergieanlage zu fertigen im Vergleich zum Fall gemäß Fig. 2a, in der ein entsprechendes erfindungsgemäßes Verfahren bei einem konstanten Pitchwinkel von 10° durchgeführt wird.

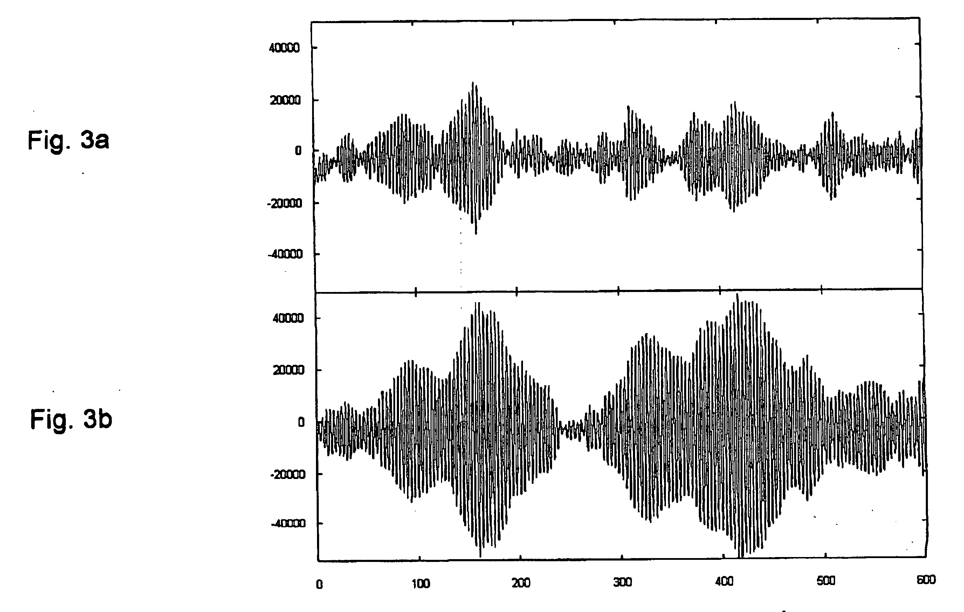

Entsprechende Kurven sind in Fig. 3a und 3b dargestellt, wobei dieses Kurven sind, die sich bei einer Windgeschwindigkeit von 6 m/s ergeben. Fig. 3a stellt wieder die Turmfußbiegemomente bei Durchführung des erfindungsgemäßen Verfahrens dar, und zwar mit einem Pitchwinkel von 20°, wohingegen Fig. 3b ein Diagramm darstellt, bei dem die Turmfußbiegemomente ohne das erfindungsgemäße Verfahren gemessen wurden (Pitchwinkel = 90°). Die dargestellten Diagramme können auch berechnete bzw. simulierte Werte darstellen.

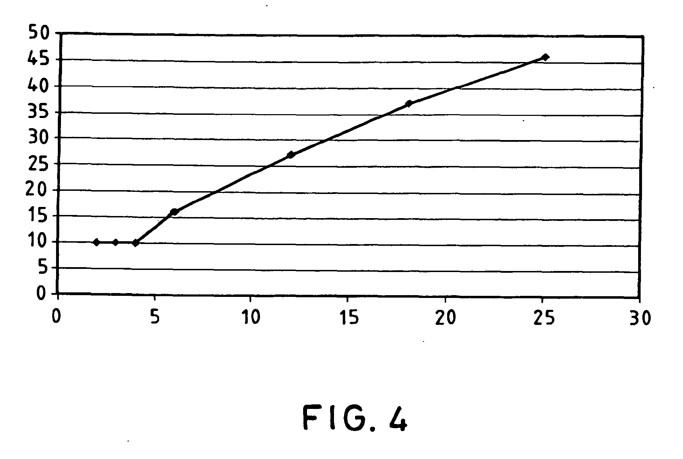

Bei einer Steuerung bzw. Regelung in Abhängigkeit der Windgeschwindigkeit wird vorzugsweise eine Kennlinie des Pitchwinkels über der Windgeschwindigkeit gemäß Fig. 4 verwendet, wobei in Fig. 4 der Pitchwinkel in Grad über der Windgeschwindigkeit in m/s aufgetragen ist. Es ist zu erkennen, dass zu höheren Windgeschwindigkeiten auch der Pitchwinkel vergrößert wird. Es kann auch bei entsprechenden Windenergieanlagen möglich sein, dass zu kleineren Windgeschwindigkeiten der Pitchwinkel auch größer ist, so dass sich bei mittleren Windgeschwindigkeiten ein Minimum des Pitchwinkels ergibt.

Selbst bei relativ kleinen Wellenhöhen kann aufgrund der Wellenperiode eine Resonanz der Windenergieanlage angeregt werden. Eine typische Eigenfrequenz liegt bei f₀ = 0,27 Hz, also einer Periodendauer von T₀ = 3,7 s. Bei kleinen Wellenhöhen und den damit in der Regel verbundenen kleinen Windgeschwindigkeiten kann es auch von Vorteil sein, den Rotor nicht mehr, wie oben erwähnt, der Windrichtung nachzuführen, sondern ausschließlich nach der Wellenrichtung, d.h. so, dass die Rotorebene parallel zu den Wellen liegt. Zum Erreichen der Trudeldrehzahl ist dann ggf. ein motorischer Betrieb des Generators vorgesehen. Die Ausrichtung nach den Wellen kann entweder, wie oben genannt, durch Auswertung des Verhältnisses von Quer- und Längsschwingungen des Turms erfolgen oder anhand der genannten Sensoren zu Erfassung der Wellenrichtung.

Im Normalbetrieb wird das erfindungsgemäße Verfahren im Wesentlichen bei Windgeschwindigkeiten unterhalb der Einschaltgeschwindigkeit der Windenergieanlage eingesetzt, da im Produktionsbetrieb, also in einem Betrieb der Windenergieanlage, bei der Energie abgeführt wird, in den meisten Fällen eine ausreichend hohe Rotordämpfung vorliegt. Im Fall, dass die Windenergieanlage aufgrund eines Störfalls nicht produktionsbereit sein sollte, kann auch bei höheren Windgeschwindigkeiten das erfindungsgemäße Verfahren sinnvoll eingesetzt werden, sobald eine kritische Schwingungsanregung vorliegt. Überwacht werden kann dies beispielsweise durch bereits vorhandene zweidimensionale Beschleunigungssensoren, die in der Gondel bzw. dem Turmkopf 3 schon vorliegen, wie beispielsweise die Sensoren 8 und 9, die in Fig. 1 schematisch dargestellt sind. Im Einzelfall kann das erfindungsgemäße Verfahren auch bei Windgeschwindigkeiten oberhalb der Abschaltwindgeschwindigkeit eingesetzt werden, obwohl nur bei außergewöhnlichen Umgebungsbedingungen eine kritische Wellenanregung bei hohen Windgeschwindigkeiten zu erwarten ist.

Sofern der Rotor trudelbereit ist, zum Beispiel bei Störungen im Generator, im Umrichter oder im Transformatorbereich und sofern eine Netzversorgung vorliegt, können sinnvoll die Rotorblattwinkel bei Auftreten von mechanischen Einwirkungen auf die Windenergieanlage, die zu Eigenschwingungen führen, eingesetzt werden. Bei Windgeschwindigkeiten, die oberhalb der Einschaltwindgeschwindigkeit liegen, sollte eine ständige Steuerung bzw. Regelung der Windenergieanlage im Hinblick auf die Trudelfrequenz bzw. die Blattwinkel vorgenommen werden. Sollte eine Netzversorgung fehlen, kann eine Art Energiesparbetrieb vorgesehen sein, bei dem der Blattwinkel beispielsweise in vorgebbaren Zeitabständen (beispielsweise 10-Minuten-Takt) durch eine kurze Einstellbewegung auf die aktuelle Windgeschwindigkeit angepasst werden. Entsprechendes gilt für die Windnachführung des Turmkopfes 3 im Azimut. Es können Hilfsenergieversorgungsvorrichtungen (Akkumulatoren oder ein Notstromaggregat, beispielsweise ein Dieselaggregat) vorgesehen sein. Eine zentrale Steuervorrichtung überwacht dann den Betriebszustand. Andere Systeme sind dann vorzugsweise nicht aktiv. Bei Überschreitung einer vorgebbaren Grenzdrehzahl oder Ausfall einer Hilfsenergieversorgung sollten die Blätter in eine sichere Fahnenstellung über die vorzugsweise vorzusehenden Akkumulatoren in der Nabe 4 gestellt werden.

Für den Fall, dass die Anlage am Netz anliegt bzw. eine Netzspannung vorliegt, ist es möglich, den Blattwinkel auf einen vorgebbaren festgelegten Winkel einzustellen, wie beispielsweise 10°, oder in Abhängigkeit von gemessenen Turmkopfbeschleunigungen mit einem vorzugsweisen Schwellenwert von ca. 0,4 m/s² geregelt oder gesteuert werden. Bei höheren Windgeschwindigkeiten könnte die Anwendung der Blattwinkel-Windgeschwindigkeitskurve gemäß Fig. 4 eingesetzt werden. Die Turmkopfbeschleunigungen können auch in diesem Fall überwacht werden. Ferner ist es möglich, anhand der Wellenhöhe, des -abstandes und der -geschwindigkeit im Voraus zu berechnen, ob entsprechende Schwingungen in einer Eigenfrequenz der Windenergieanlage auftreten können, die problematisch werden, woraufhin dann das erfindungsgemäße Verfahren greifen kann bzw. gestartet werden kann. Es kann auch ein intelligentes System ausgebildet sein, dass in Abhängigkeit der physikalischen Rahmenbedingungen (Wellenhöhe, -geschwindigkeit, -abstand, Windgeschwindigkeit, Temperatur, Luftdruck und/oder weiteren Parametern) die bei diesen Parametern auftretenden Schwingungen der Windenergieanlage gespeichert sind, so dass auch in Abhängigkeit von schon aufgetretenen Fällen von Schwingungen bzw. schon gewonnenen Erfahrungen das erfindungsgemäße Verfahren durchgeführt wird.

### Bezugszeichenliste

- 1: Windenergieanlage
- 2: Turm
- 3: Turmkopf
- 4: Nabe
- 5: Rotorblatt
- 6: Blattwinkelverstelleinrichtung
- 7-9: Sensor
- 10: Gewässerplattform
- 11: Welle
- 12: Plattform
- 13: Monopile
- 14: Gewässergrund
- 15: Messsignal
- 16: Steuer- oder Regelvorrichtung
- 17: Sensor
- 18: Rechenvorrichtung
- 19: Sensor
- 20: Stromnetz
- 21: Kabel

## Patentansprüche

1. Verfahren zum Betrieb einer in Gewässergrund (14) gegründeten Windenergieanlage (1), wobei die Windenergieanlage (1) eine Tragstruktur (2, 13) und einen Rotor (4, 5), der an der Tragstruktur (2, 13) angeordnet ist, umfasst, wobei der Rotor (4, 5) ein Rotorblatt aufweist (5), wobei zur Verringerung der durch mechanische Einwirkungen auf die Tragstruktur (2, 13) erzeugten Schwingungen der Tragstruktur (2, 13) die Windenergieanlage (1) im Trudelbetrieb geführt wird, wobei die mechanischen Einwirkungen auf die Tragstruktur (2, 13) durch Wasserwellen (11) induziert sind.

2. Verfahren nach Anspruch 1, **dadurch gekennzeichnet, dass** die Windenergieanlage (1) bei der Durchführung des Verfahrens keine Energie an ein Netz abgibt.

3. Verfahren nach Anspruch 1 oder 2, **dadurch gekennzeichnet, dass** die Windenergieanlage (1) eine Blattwinkelverstellvorrichtung (6) aufweist, wobei in Abhängigkeit wenigstens eines Parameters ein vorgebbarer Blattwinkel eingestellt wird.

4. Verfahren nach Anspruch 3, **dadurch gekennzeichnet, dass** der Blattwinkel in Abhängigkeit von der Trudeldrehzahl und/oder der Windgeschwindigkeit und/oder einer gemessenen Schwingungsamplitude der Tragstruktur (2, 13) eingestellt wird.

5. Verfahren nach einem der Ansprüche 1 bis 4, **dadurch gekennzeichnet, dass** eine vorgebbare Trudeldrehzahl eingestellt wird.

6. Verfahren nach Anspruch 5, **dadurch gekennzeichnet, dass** die Trudeldrehzahl in Abhängigkeit der Windgeschwindigkeit und/oder des mittleren Blattwinkels eingestellt wird.

7. Verfahren nach einem der Ansprüche 1 bis 6, **dadurch gekennzeichnet, dass** die Trudeldrehzahl, insbesondere bei Windgeschwindigkeiten oberhalb 3m/s, zwischen 10 % und 80 %, insbesondere zwischen 15 % und 60 %, der Nenndrehzahl der Windenergieanlage (1) liegt.

8. Verfahren nach einem der Ansprüche 1 bis 7, **dadurch gekennzeichnet, dass** wenigstens ein Parameter (Messwert) der Wellenhöhe, des Wellenabstands, der Wellengeschwindigkeit, der Wellenrichtung, der Turmkopfbeschleunigung, der Schwingungsamplitude der Tragstruktur (2, 13), der mittleren Windgeschwindigkeit oder der mittleren Trudeldrehzahl gemessen wird und mit einem dazu vorgebbaren Parameter (Vorgabewert) verglichen wird und in Abhängigkeit des Ergebnisses des Vergleichs die Trudeldrehzahl oder der Blattwinkel oder der Nachführwinkel des Rotors gesteuert oder geregelt wird.

9. Verfahren nach einem der Ansprüche 1 bis 8, **dadurch gekennzeichnet, dass** der Rotor (4, 5) einer Windrichtung nachgeführt wird, wobei die Windnachführung abhängig von der Windrichtung und/oder dem Verhältnis der Amplituden von Turmkopflängs- zu Turmkopfquerschwingung ist.

10. Verfahren nach einem der Ansprüche 1 bis 9, **dadurch gekennzeichnet, dass** ein unterer und/oder ein oberer Drehzahlgrenzwert des Rotors (4, 5) vorgebbar ist, wobei bei Unterschreiten des unteren Drehzahlgrenzwerts oder Überschreiten des oberen Drehzahlgrenzwerts eine Veränderung des Blattwinkels des Rotorblatts (5) vorgenommen wird.

11. Verfahren nach einem der Ansprüche 1 bis 10, **dadurch gekennzeichnet, dass** bei fehlender Energieversorgung das Rotorblatt (5) in eine Fahnenstellung verbracht wird.

12. Windenergieanlage (1), die in einem Gewässergrund (14) gegründet ist, mit einer Tragstruktur (2, 13) und einem Rotor (4, 5), der ein Rotorblatt (5) umfasst, wobei wenigstens ein Sensor (7, 8, 9, 17, 19) vorgesehen ist, der die Amplitude, die Beschleunigung und/oder die Richtung einer Schwingung der Tragstruktur (2, 13) und/oder eine Beschleunigung der Tragstruktur (2, 13) misst und/oder wenigstens eine physikalische Größe, nämlich der Wellenabstand und/oder die Wellengeschwindigkeit von Wasserwellen die auf die Windenergieanlage (1) mechanisch einwirken und eine Schwingung oder Schwingungen der Tragstruktur hervorruft oder hervorrufen, misst, wobei eine Steuer- oder Regelvorrichtung (16) vorgesehen ist, die in Abhängigkeit wenigstens eines solchen Messwertes einen Blattwinkel des Rotorblatts (5) oder eine Trudeldrehzahl zur Verringerung der durch mechanische Einwirkungen auf die Tragstruktur (2, 13) erzeugten Schwingungen der Tragstruktur (2, 13) vorgibt, wobei die mechanischen Einwirkungen auf die Tragstruktur ((2, 13) durch Wasserwellen (11) induziert sind.

13. Windenergieanlage (1) nach Anspruch 12, **dadurch gekennzeichnet, dass** außerdem eine Blattwinkelverstellvorrichtung (6) vorgesehen ist, die den von der Steuer- oder Regelvorrichtung (16) vorgegebenen Blattwinkel einstellt.

14. Windenergieanlage (1) nach Anspruch 12 oder 13, **dadurch gekennzeichnet, dass** ein Sensor (17) vorgesehen ist, der eine mittlere Trudeldrehzahl des Rotors (4, 5) misst oder dass eine Rechenvorrichtung (18) vorgesehen ist, die die mittlere Trudeldrehzahl bestimmt, wobei die mittlere Trudeldrehzahl in der Steuer- oder Regelvorrichtung (17) verarbeitet wird, um den Blattwinkel des Rotorblatts (5) vorzugeben.

15. Windenergieanlage (1) nach einem der Ansprüche 12 bis 14, **dadurch gekennzeichnet, dass** ein Sensor (19) vorgesehen ist, der eine Wellenhöhe, einen Wellenabstand und/oder eine Wellengeschwindigkeit misst, wobei der Messwert oder die Messwerte in der Steuer- oder Regelvorrichtung (16) verarbeitet wird oder werden, um den Blattwinkel des Rotorblatts (5) vorzugeben.

16. Softwareprodukt mit Programm-Code-Mitteln, das ausgestaltet ist, um alle Verfahrensschritte gemäß dem Verfahren nach einem der Ansprüche 1 bis 11 auf einem Computer (18) und/oder einer Steuer- oder Regelvorrichtung (16) einer Windenergieanlage auszuführen.

17. Softwareprodukt nach Anspruch 16, **dadurch gekennzeichnet, dass** das Softwareprodukt auf wenigstens einem Datenträger oder Medium speicherbar ist.

18. Steuer- oder Regelvorrichtung (16) einer Windenergieanlage, die ausgelegt ist, um ein Softwareprodukt nach Anspruch 16 oder 17 auszuführen.

## Claims

1. A method of operating a wind turbine generator system (1), which is founded in the bed (14) of a body of water, wherein the wind turbine generator system (1) includes a support structure (2, 13) and a rotor (4, 5) which is arranged on the support structure (2, 13), wherein the rotor (4, 5) includes a rotor blade (5), wherein in order to reduce the oscillations of the support structure (2, 13) produced by mechanical influences on the support structure (2, 13) the wind turbine generator system (1) is operated in idling mode, wherein the mechanical influences on the support structure (2, 13) are induced by water waves (11).

2. A method as claimed in claim 1, **characterised in that** the wind turbine generator system (1) delivers no energy to a network whilst the method is performed.

3. A method as claimed in claim 1 or 2, **characterised in that** the wind turbine generator system (1) includes a blade angle adjusting device (6), whereby a predetermineable blade angle is set in dependence on at least one parameter.

4. A method as claimed in claim 3, **characterised in that** the blade angle is set in dependence on the idling speed and/or the wind speed and/or a measured oscillation amplitude of the support structure (2, 13).

5. A method as claimed in one of claims 1 to 4, **characterised in that** a predetermineable idling speed is set.

6. A method as claimed in claim 5, **characterised in that** the idling speed is set in dependence on the wind speed and/or the mean blade angle.

7. A method as claimed in one of claims 1 to 6, **characterised in that** the idling speed, in particular at wind speeds above 3m/s, is between 10% and 80%, particularly between 15% and 60%, of the rated speed of the wind turbine generator system (1).

8. A method as claimed in one of claims 1 to 7, **characterised in that** at least one parameter (measured value) of the wave height, the wave spacing, the wave speed, the wave direction, the tower head acceleration, the oscillation amplitude of the support structure (2, 13), the mean wind speed or the mean idling speed is measured and is compared with a parameter (pre-set value), which is predeterminable for that purpose, and the idling speed or the blade angle or the tracking angle of the rotor is controlled or regulated in dependence on the result of the comparison.

9. A method as claimed in one of claims 1 to 8, **characterised in that** the rotor (4, 5) is caused to track a wind direction, wherein the wind tracking is dependent on the wind direction and/or the ratio of the amplitudes of the tower head longitudinal oscillation to the tower head transverse oscillation.

10. A method as claimed in one of claims 1 to 9, **characterised in that** a lower and/or an upper speed threshold value of the rotor (4, 5) is predeterminable, wherein a change in the blade angle of the rotor blade is effected when the speed falls below the lower speed threshold value or rises above the upper speed threshold value.

11. A method as claimed in one of claims 1 to 10, **characterised in that** in the absence of energy supply the rotor blade (5) is brought into a feathered position.

12. A wind turbine generator system (1), which is founded in the bed (14) of a body of water, with a support structure (2, 13) and a rotor (4, 5), which includes a rotor blade (5), wherein at least one sensor (7, 8, 9, 17, 19) is provided, which measures the amplitude, the acceleration and/or the direction of an oscillation of the support structure (2, 13) and/or an acceleration of the support structure (2, 13) and/or measures at least one physical parameter, namely the wave spacing and/or the wave speed of water waves, which act mechanically on the wind turbine generator system (1) and causes or cause an oscillation or oscillations of the support structure, wherein a control or regulating device (16) is provided, which predetermines a blade angle of the rotor blade (5) or an idling speed in dependence on at least one such measured value in order to reduce the oscillations of the support structure (2,13) produced by mechanical influences on the support structure (2, 13) wherein the mechanical influences are on the support structure (2, 13) are induced by water waves (11).

13. A wind turbine generator system (1) as claimed in claim 12, **characterised in that** a blade angle adjusting device (6) is also provided, which adjusts the blade angle predetermined by the control or regulating device (16).

14. A wind turbine generator system (1) as claimed in claim 12 or 13, **characterised in that** a sensor (17) is provided, which measures a mean idling speed of the rotor (4, 5), or that a calculating device (18) is provided, which determines the mean idling speed, wherein the mean idling speed is processed in the control or regulating device (17) in order to predetermine the blade angle of the rotor blade (5).

15. A wind turbine generator system (1) as claimed in one of claims 12 to 14, **characterised in that** a sensor (19) is provided, which measures a wave height, a wave spacing and/or a wave speed, wherein the measured value or the measured values is or are processed in the control or regulating device (16) in order to predetermine the blade angle of the rotor blade (5).

16. A software product with programme code means, which is arranged so as to perform all the method steps in the method as claimed in one of claims 1 to 11 on a computer (18) and/or a control or regulating device (16) of a wind turbine generator system.

17. A software product as claimed in claim 16, **characterised in that** the software product is storable on at least one data carrier or medium.

18. A control or regulating device (16) of wind turbine generator system which is designed to execute a software product as claimed in claim 16 or 17.

## Revendications

1. Procédé de fonctionnement d'une installation d'énergie éolienne (1) basée sur le sol du fond de l'eau (14), l'installation d'énergie éolienne (1) comprenant une structure portante (2, 13) et un rotor (4, 5) qui est agencé sur la structure portante (2, 13), le rotor (4, 5) présentant une pale de rotor (5), l'installation d'énergie éolienne (1) étant entraînée dans un fonctionnement de vrille afin de réduire les oscillations de la structure portante (2, 13) produites par les effets mécaniques s'exerçant sur la structure portante (2, 13), et les effets mécaniques s'exerçant sur la structure portante (2, 13) étant induits par des vagues de l'eau (11).

2. Procédé selon la revendication 1, **caractérisé en ce que** l'installation d'énergie éolienne (1) ne délivre pas d'énergie dans un réseau pendant l'exécution du procédé.

3. Procédé selon la revendication 1 ou la revendication 2, **caractérisé en ce que** l'installation d'énergie éolienne (1) présente un dispositif de réglage de l'angle de pale (6), un angle de pale apte à être prédéterminé étant réglé en fonction d'au moins un paramètre.

4. Procédé selon la revendication 3, **caractérisé en ce que** l'angle de pale est réglé en fonction de la vitesse de rotation en vrille et/ou de la vitesse du vent et/ou d'une amplitude d'oscillation mesurée de la structure portante (2, 13).

5. Procédé selon l'une des revendications 1 à 4, **caractérisé en ce qu'**une vitesse de rotation en vrille pouvant être prédéterminée est réglée.

6. Procédé selon la revendication 5, **caractérisé en ce que** la vitesse de rotation en vrille est réglée en fonction de la vitesse du vent et/ou de l'angle de pale moyen.

7. Procédé selon l'une des revendications 1 à 6, **caractérisé en ce que** la vitesse de rotation en vrille se situe entre 10 % et 80 %, en particulier entre 15 % et 60 % de la vitesse de rotation nominale de l'installation d'énergie éolienne (1), en particulier à des vitesses de vent supérieures à 3 m/s.

8. Procédé selon l'une des revendications 1 à 7, **caractérisé en ce qu'**au moins un paramètre (valeur de mesure) de la hauteur des vagues, de l'écartement des vagues, de la vitesse des vagues, de la direction des vagues, de l'accélération de la section supérieure de la tour, de l'amplitude d'oscillation de la structure portante (2, 13), de la vitesse moyenne du vent ou de la vitesse de rotation en vrille moyenne est mesuré et comparé à un paramètre y afférent pouvant être prédéterminé (valeur de consigne), et en fonction du résultat de la comparaison, la vitesse de rotation en vrille ou l'angle de pale ou l'angle de poursuite du rotor est commandé(e) ou réglé(e).

9. Procédé selon l'une des revendications 1 à 8, **caractérisé en ce que** le rotor (4, 5) poursuit une direction du vent, la poursuite du vent dépendant de la direction du vent et/ou du rapport des amplitudes entre l'oscillation longitudinale et l'oscillation transversale de la section supérieure de la tour.

10. Procédé selon l'une des revendications 1 à 9, **caractérisé en ce qu'**une valeur limite inférieure et/ou supérieure de la vitesse de rotation du rotor (4, 5) peut être prédéterminée, et **en ce qu'**une modification de l'angle de pale de la pale du rotor (5) étant effectuée en cas de diminution en dessous de la valeur limite inférieure de la vitesse de rotation ou en cas de dépassement de la valeur limite supérieure de la vitesse de rotation.

11. Procédé selon l'une des revendications 1 à 10, **caractérisé en ce qu'**en cas d'absence d'alimentation d'énergie, la pale du rotor (5) est placée dans une position en drapeau.

12. Installation d'énergie éolienne (1) qui est basée sur le sol du fond de l'eau (14), comprenant une structure portante (2, 13) et un rotor (4, 5) qui comprend une pale de rotor (5), au moins un capteur (7, 8, 9, 17, 19) étant prévu, qui mesure l'amplitude, l'accélération et/ou la direction d'une oscillation de la structure portante (2, 13) et/ou une accélération de la structure portante (2, 13) et/ou qui mesure au moins une grandeur physique, à savoir l'écartement des vagues et/ou la vitesse des vagues d'eau qui exercent un effet mécanique sur l'installation d'énergie éolienne (1) et provoquent une oscillation ou des oscillations de la structure portante, un dispositif de commande ou de réglage (16) étant prévu, qui, en fonction d'au moins une telle valeur de mesure, prescrit un angle de pale de la pale du rotor (5) ou une vitesse de rotation en vrille afin de réduire les oscillations de la structure portante (2, 13) produites par les effets mécaniques s'exerçant sur la structure portante (2, 13), les effets mécaniques s'exerçant sur la structure portante (2, 13) étant induits par des vagues de l'eau (11).

13. Installation d'énergie éolienne (1) selon la revendication 12, **caractérisée en ce qu'**il est également prévu un dispositif de réglage de l'angle de pale (6), qui met en place l'angle de pale prescrit par le dispositif de commande ou de réglage (16).

14. Installation d'énergie éolienne (1) selon la revendication 12 ou 13, **caractérisée en ce qu'**il est prévu un capteur (17) qui mesure une vitesse de rotation en vrille moyenne du rotor (4, 5) ou **en ce qu'**il est prévu un dispositif de calcul (18) qui détermine la vitesse de rotation en vrille moyenne, étant entendu que la vitesse de rotation en vrille moyenne est traitée dans le dispositif de commande ou de réglage (16) pour prescrire l'angle de pale de la pale du rotor (5).

15. Installation d'énergie éolienne (1) selon l'une des revendications 12 à 14, **caractérisée en ce qu'**il est prévu un capteur (19) qui mesure une hauteur des vagues, un écartement des vagues et/ou une vitesse des vagues, la valeur de mesure ou les valeurs de mesure étant traitées dans le dispositif de commande ou de réglage (16) pour prescrire l'angle de pale de la pale du rotor (5).

16. Produit logiciel comprenant des moyens de code de programme qui est conçu pour exécuter toutes les étapes de procédé conformément au procédé selon l'une des revendications 1 à 11 sur un ordinateur (18) et/ou un dispositif de commande ou de réglage (16) d'une installation d'énergie éolienne.

17. Produit logiciel selon la revendication 16, **caractérisé en ce que** le produit logiciel peut être enregistré sur au moins un support de données ou un média.

18. Dispositif de commande ou de réglage (16) d'une installation d'énergie éolienne qui est conçu pour exécuter un produit logiciel selon la revendication 16 ou 17.
